# EUROPEAN PATENT SPECIFICATION

(11) **EP 4 583 218 B1**
(45) Date of publication and mention of the grant of the patent: **25.03.2026**
(21) Application number: 24201969.3
(22) Date of filing: 23.09.2024
(51) Int. Cl.: H01M 10/04, B65H 19/28, B65H 75/28, H01M 10/0525, H01M 10/0587

(54) **MANDREL MEMBER OF WINDER FOR SECONDARY BATTERY**
DORNELEMENT EINES WICKLERS FÜR SEKUNDÄRBATTERIE
MANDRIN D'ENROULEUR POUR BATTERIE SECONDAIRE

(30) Priority: 08.01.2024 KR 20240002681
(43) Date of publication of application: 09.07.2025
(73) Proprietor: Samsung SDI Co., Ltd., Yongin-si, Gyeonggi-do 17084 (KR)
(72) Inventor: Park, Yeon Jin, Yongin-si, Gyeonggi-do 17084 (KR); Kim, Joung Ku, Yongin-si, Gyeonggi-do 17084 (KR); Park, Jung Hyun, Yongin-si, Gyeonggi-do 17084 (KR); Kim, Kyoung Tae, Yongin-si, Gyeonggi-do 17084 (KR); Kim, Jung Hyun, Yongin-si, Gyeonggi-do 17084 (KR); Lee, Jung Su, Yongin-si, Gyeonggi-do 17084 (KR); Kim, So Yeon, Yongin-si, Gyeonggi-do 17084 (KR)
(74) Representative: Gulde & Partner

(56) References cited:
- CN-A- 106 953 124
- JP-B2- 6 591 298

## Description

### BACKGROUND

### 1. Field

The invention relates to a mandrel member of a winder for a secondary battery, and more specifically, to a mandrel member configured to manufacture a jelly roll-type electrode assembly and a winder comprising the same.

### 2. Description of the Related Art

Mandrel members are disclosed in CN 106 953 124 A and JP 6 591 298 B2.

Recently, as technology development and demand for mobile devices increase, the demand for secondary batteries as energy sources for compact and lightweight electric devices such as smartphones, laptop computers, and computers is rapidly increasing.

Generally, such a secondary battery includes an electrode assembly, a battery case that accommodates the electrode assembly and an electrolyte, and a cap assembly that is coupled to an upper opening of the battery case to seal the case and allow a current generated in the electrode assembly to flow to an external device. Such a secondary battery mainly uses lithium-based oxide as a positive electrode active material and a carbon material as a negative electrode active material. Generally, batteries may be classified into liquid electrolyte batteries and polymer electrolyte batteries according to types of electrolytes. Batteries using a liquid electrolyte may be referred to as lithium ion batteries, and batteries using a polymer electrolyte may be referred to as lithium polymer batteries. Lithium secondary batteries may be manufactured in various shapes. According to shapes of battery cases, lithium secondary batteries may be classified into cylindrical and prismatic batteries in which an electrode assembly is embedded in a cylindrical or prismatic metal can, and pouch-type batteries in which an electrode assembly is embedded in a pouch-type case of an aluminum stack sheet.

In addition, an electrode assembly embedded in a battery case is a chargeable or dischargeable power generation element having a stacked structure of a positive electrode, a separator, and a negative electrode. The electrode assembly is classified into a jelly roll-type electrode assembly formed by winding a positive electrode and a negative electrode with a separator interposed between the positive electrode and the negative electrode which are long sheet-type electrodes coated with an active material, and a stack-type electrode assembly by sequentially stacking a plurality of positive electrodes, a plurality of negative electrodes, which have a certain size, and a plurality of separators interposed therebetween.

Among these, the jelly roll-type electrode assembly has an advantage of being easy to manufacture and having high energy density per weight. A process of manufacturing a jelly roll-type electrode assembly includes a winding process in which an end portion of a sheet-type stack including a positive electrode, a separator, and a negative electrode is inserted into and fixed to a mandrel member and wound in a cylindrical shape, and then the mandrel is removed, and a reform process in which a center pin is inserted into the center of a jelly roll-type electrode assembly from which the mandrel is removed.

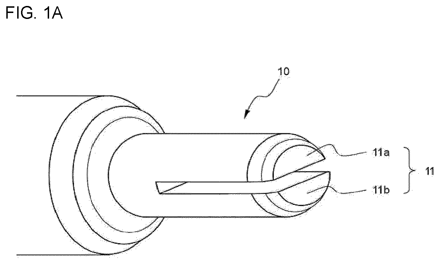

FIG. 1A schematically illustrates a structure of a comparative mandel used in a winding process. Referring to FIG. 1A, a mandrel 10 is an overall cylindrical pillar-shaped member, and one end portion thereof is split into two semicircles at a central portion such that a sheet-type stack may be inserted therein. If viewed in a cross section, the end portion has a taegeuk pattern structure in which two semicircles 11a and 11b face each other. According to embodiments, a planar cut surface may be partially formed on an outer surface of one of the semicircles such that an electrode tab and protective tape of the sheet-type stack may be positioned.

After a winding process of the sheet-type stack is completed, the mandrel 10 is removed, and a center pin (not shown) is inserted into a space formed in a central portion of a jelly roll by removing the mandrel (reform process). The center pin is generally made of a metal material to have a certain level of strength, has a structure in which a plate is bent round, and has a hollow cylindrical structure in which upper ends of a horizontal cross section may not be in contact with each other. For example, an electrode assembly is fixed to a jig (not shown), and the center pin advances or retreats toward a hollow central portion of the fixed electrode assembly. In such a process, a separator positioned at a central portion is pushed toward an inner peripheral surface of the central portion, and the separator with a taegeuk pattern is removed.

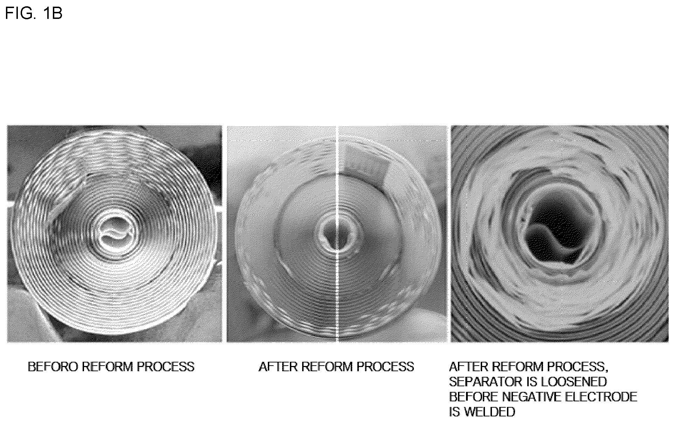

However, if an electrode assembly is manufactured according to such a process, a problem has been found that a separator in close contact with an inner peripheral surface of a central portion is loosened before a negative electrode tab is welded. FIG. 1B is an image showing a jelly roll-type electrode assembly in which a reform loosening phenomenon is found after a reform process. As a separator becomes thinner and a size of a mandrel decreases, a separator loosening phenomenon occurs more frequently. Typically, a positive electrode tab/negative electrode welding process is performed after a reform process, but as a reform loosening phenomenon occurs, there are many cases in which the quality of welding of the electrode tabs is also poor.

### SUMMARY

According to the invention, a mandrel member of a winder for a secondary battery according to claim 1 is provided, which is mounted in a winder configured to manufacture a jelly roll-type electrode assembly by winding a stack of a first electrode plate, a separator, and a second electrode plate, the mandrel member including a cylindrical body having a hollow portion, wherein the cylindrical body includes a plurality of slits o cross the cylindrical body in a hollow axis direction so that the hollow portion inside the cylindrical body may be in fluid communication with the outside of the cylindrical body.

Each slit is oriented to have an inclination with respect to a radial direction so that air passing through the hollow portion leaks out through the plurality of slits in a substantially tangential direction with respect to an outer peripheral surface of the cylindrical body.

The mandrel member is one member and the plurality of slits is formed at equal intervals in a circumferential direction, and wherein each of the plurality of slits has a curved shape.

An even number of slits may be formed at equal intervals in a circumferential direction and have an arrangement structure in which facing slits may be symmetrical with each other.

Each slit may have an oblique inclination in a direction opposite to a rotation direction of the mandrel member.

The mandrel member may be a hollow cylindrical body of which a vertical cross-sectional outer diameter is 6 ϕ, each of the slits may have an arc shape of a virtual circle with a diameter of 4 ϕ, and centers of each virtual circle forming the plurality of slits may be present on a virtual concentric circle.

According to another aspect of the invention, a mandrel member of a winder for a secondary battery according to claim 5 is provided. The mandrel member includes a plurality of blade units, which extend in a longitudinal direction, to have the plurality of slits at preset intervals.

A trailing end portion of one blade unit in a width direction and a leading end portion of an adjacent blade unit in a width direction overlaps each other to have one of the preset intervals to form the plurality of slits.

The mandrel member may include six blade units.

Each blade unit has a structure in which an outer peripheral surface and an inner peripheral surface are curved inward in the width direction, a curvature of the outer peripheral surface is less than a curvature of the inner peripheral surface, and an outer peripheral surface of the trailing end portion of one blade unit in the width direction and an inner peripheral surface of the leading end portion of the adjacent blade unit in the width direction overlap each other to form a slit of the plurality of slits having a curved shape.

A leading end portion of the mandrel member may be mounted on an air supplier provided in the winder, and air discharged from the air supplier may enter the hollow portion from the leading end portion of the mandrel member, the air flowing into the hollow portion may branch into a plurality of portions through the plurality of slits and may be ejected outward in a radial direction of the cylindrical body, and the remaining air may be discharged to the outside from a trailing end portion of the mandrel member.

According to another aspect of the present invention, a winder for manufacturing a jelly roll-type electrode assembly of a secondary battery is configured to wind a stack of a first electrode plate, a separator, and a second electrode plate to form a jelly roll-type electrode assembly. The winder comprises a mandrel member as recited in any of claim 1 to 8 and including a cylindrical body having a hollow portion, wherein the cylindrical body includes a plurality of slits o cross the cylindrical body in a hollow axis direction so that the hollow portion inside the cylindrical body may be in fluid communication with the outside of the cylindrical body.

The winder may further comprise an air supplier, wherein a leading end portion of the mandrel member is mounted on the air supplier.

### BRIEF DESCRIPTION OF DRAWINGS

Features will become apparent to those of ordinary skill in the art by describing in detail exemplary embodiments with reference to the attached drawings, in which:
FIG. 1A schematically illustrates a structure of a mandrel used in a winding process according to a comparative example;
FIG. 1B shows images showing a jelly roll-type electrode assembly in which a reform loosening phenomenon is found after a reform process is performed according to a comparative example;
FIG. 2 is a schematic view illustrating a winder to which a mandrel member is applied according to one or more embodiments of the present invention;
FIG. 3A is a conceptual view illustrating a mandrel member being mounted on a winding body according to one or more embodiments of the present invention;
FIG. 3B shows a perspective view, a front view, and a cross-sectional view of the mandrel member according to one or more embodiments of the present invention;
FIG. 4A shows cross-sectional views of the mandrel member according to one or more embodiments of the present invention;
FIG. 4B shows cross-sectional views of a mandrel member according to one or more embodiments of the present invention; and
FIG. 5 is a conceptual view illustrating a state in which a leading end portion of a sheet-type stack is close to the mandrel member of FIG. 3A for a winding process.

### DETAILED DESCRIPTION

Example embodiments will now be described more fully hereinafter with reference to the accompanying drawings; however, they may be embodied in different forms and should not be construed as limited to the embodiments set forth herein. The scope of the invention is defined by the appended claims.

In the drawing figures, the dimensions of layers and regions may be exaggerated for clarity of illustration. It will also be understood that if a layer or element is referred to as being "on" another layer or substrate, it can be directly on the other layer or substrate, or intervening layers may also be present. Further, it will be understood that if a layer is referred to as being "under" another layer, it can be directly under, and one or more intervening layers may also be present. In addition, it will also be understood that if a layer is referred to as being "between" two layers, it can be the only layer between the two layers, or one or more intervening layers may also be present. Like reference numerals refer to like elements throughout.

As used in this specification, the term "and/or" includes any and all combinations of one or more of the associated listed items. Also, in this specification, it will be understood that if an element A is referred to as being "connected to" an element B, the element A can be directly connected to the element B, or an intervening element C may be present between the elements A and B so that the element A can be indirectly connected to the element B. The terminologies used herein are for the purpose of describing particular embodiments only and are not intended to be limiting of the present disclosure. As used herein, the singular forms are intended to include the plural forms as well, unless the context clearly indicates otherwise. Further, the terms "comprise and include" and/or "comprising and including" used in this specification should be interpreted as specifying the presence of described shapes, numbers, steps, operations, members, elements, and/or groups thereof and do not exclude the presence or addition of other shapes, numbers, steps, operations, members, elements, and/or groups thereof.

It will be understood that, although the terms first, second, etc. may be used herein to describe various members, components, regions, layers, and/or portions, these members, components, regions, layers, and/or portions should not be limited by these terms. These terms are only used to distinguish one member, component, region, layer, or portion from another region, layer, or portion. Thus, a first member, component, region, layer, or portion which will be described below may also refer to a second member, component, region, layer, or portion, without departing from the teaching of the present disclosure.

Spatially relative terms, such as "beneath," "below," "lower," "above," "upper," and the like, may be used herein for easy understanding of one element or feature and another element(s) or feature(s) as illustrated in the drawings. These spatially relative terms are intended for easy comprehension of the prevent disclosure according to various process states or usage states of the prevent disclosure, and thus, the present disclosure is not limited thereto. For example, if an element or feature in the drawings is turned over, the element and feature described as "beneath" or "below" are changed into "above" or "upper." Thus, the term "below" may encompass the term "above" or "below."

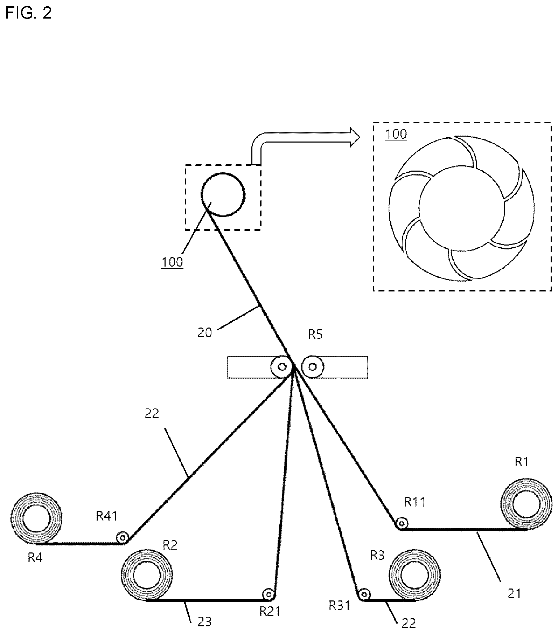

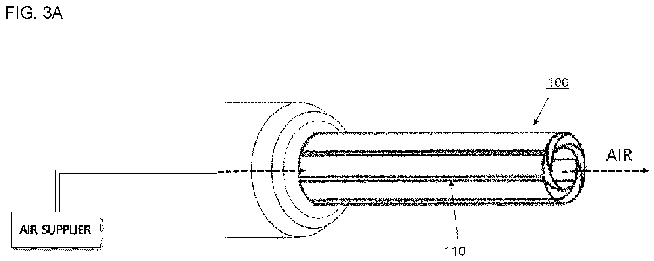

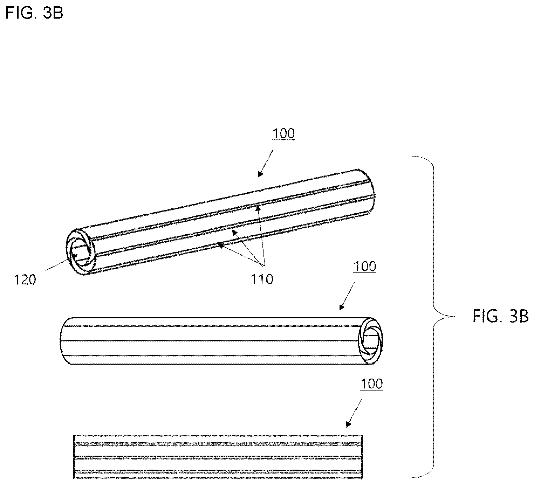

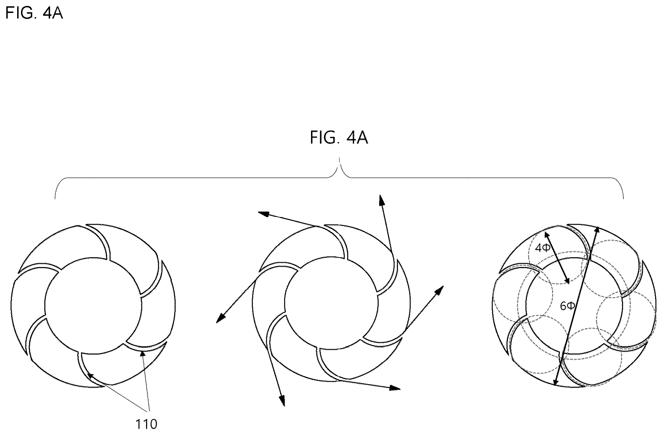

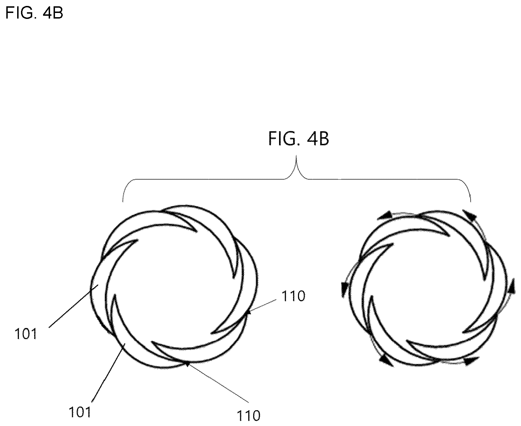

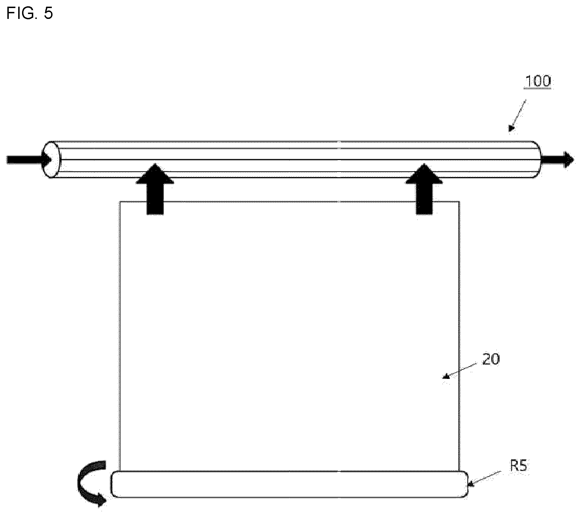

FIG. 2 is a schematic side view illustrating a winder to which a mandrel member may be applied according to one or more embodiments of the present invention, FIG. 3A is a conceptual view illustrating a mandrel member being mounted on a winding body according to one or more embodiments of the present invention. FIG. 3B shows a perspective view, a front view, and a cross-sectional view of the mandrel member according to one or more embodiments of the present invention. FIG. 4A shows cross-sectional views of the mandrel member according to one or more embodiments of the present invention. FIG. 4B shows cross-sectional views of a mandrel member according to one or more embodiments of the present invention. FIG. 5 is a conceptual view illustrating a state in which a leading end portion of a sheet-type stack is close to the mandrel member of FIG. 3A for a winding process.

The mandrel member 100 according to the present invention may be one of the parts mounted inside the winder used for manufacturing an electrode assembly, in particular, a jelly roll-type electrode assembly. While rotating, the mandrel member 100 winds a stack 20 of a first electrode plate 21, separators 22, and a second electrode plate 23 on an outer peripheral surface of the mandrel member 100 to manufacture a jelly roll-type electrode assembly.

For example, referring to FIG. 2, the winder may manufacture an electrode assembly by winding the first electrode plate 21, the second electrode plate 23, and a first separator 22, and additionally winding a second separator 22. For example, the winder may include first to fourth supply rolls R1, R2, R3, and R4, first to fourth transfer rolls R11, R21, R31, and R41, a nip roll R5, and the mandrel member 100. The first electrode plate 21 and the second electrode plate 23, which may have a band shape, are wound around the first supply roll R1 and the second supply roll R2, respectively, and the separators 22 having a band shape may be wound around the third supply roll R3 and the fourth supply roll R4. The first and second transfer rolls R11 and R21 support the first and second electrode plates 21 and 23 supplied from the first and second supply rolls and transfer the first and second electrode plates 21 and 23 to the nip roll R5, and the third and fourth transfer rolls R31 and R41 support the separators 22 supplied from the third and fourth supply rolls and transfer the separators 22 to the nip roll R5. In this case, for example, the first electrode plate 21 may form a positive electrode in the electrode assembly, and the second electrode plate 23 may form a negative electrode in the electrode assembly.

A pair of nip rolls R5 may be disposed at a left side and a right side of one side of the first to fourth transfer rolls. The nip rolls R5 gather the first electrode plate 21, the second electrode plate 23, the separator 22 therebetween, which may be supported and supplied by the first to fourth transfer rolls R11, R21, R31, and R41 in one place to sequentially stack the first electrode plate 21, the separator 22, the second electrode plate 23, and another separator 22 to guide the first electrode plate 21, the first separator 22, the second electrode plate 23, and the second separator 22 to be transferred toward the mandrel member 100.

Thereafter, each end of the stack 20 of the first electrode plate 21, the first separator 22, the second electrode plate 23, and the second separator 22 of the stack 20 may be guided by the nip roll R5 to move close to an outer peripheral surface of the mandrel member 100. In this state, while rotating, the mandrel member 100 winds the first electrode plate 21, the first separator 22, the second electrode plate 23, and the second separator 22 on the outer peripheral surface thereof in a jelly roll state.

The mandrel member 100 according to one or more embodiments of the present disclosure is completely different from a conventional general core or mandrel in a shape and a method of fixing the stack 20.

For example, the mandrel member 100 of the present disclosure protrudes and extends coaxially from a mandrel body and has a shape of a hollow cylindrical body. As described above with reference to FIG. 1A, a conventional mandrel member 100 has a taegeuk pattern structure in which an end portion may be split into two semicircles facing each other, and an insertion groove for inserting and fixing a sheet-type stack may be formed between the semicircles. On the other hand, the mandrel member 100 of the present invention does not have a separate groove for fixing the sheet-type stack 20, but includes an empty space 120 (hollow portion) at a central portion of the mandrel member 100 extending in an axis direction (hereinafter referred to as the hollow axis) of the mandrel member 100. In the cylindrical body, slits 110 are formed to cross the cylindrical body in the hollow axis direction so that the hollow portion 120 inside the cylindrical body is in fluid communication with the outside of the cylindrical body.

Referring to a side surface of the mandrel member 100 shown in FIGS. 3A and 3B, a plurality of slits 110 extend in a longitudinal direction (direction parallel to the hollow axis) in a cylindrical sidewall of the mandrel member 100, and respective slits 110 are formed at equal intervals in a circumferential direction as recited in claim 1. In the drawings, six slits 110 may be formed as an example. Referring to a cross section of the mandrel member 100 shown in FIGS. 4A and 4B, each slit 110 passes through a sidewall of the cylindrical body so that the hollow portion 120 of the cylindrical body is in fluid communication with the outside of the sidewall of the cylindrical body. In this case, as recited in claim 1, each slit 110 is oriented to have an inclination with respect to a radial direction. In other words, each slit 110 has an oblique inclination with respect to a normal direction radially facing outward from the hollow axis toward one side, that is, in a direction opposite to a rotation direction of the mandrel member 100. An angle of the inclination gradually may increase in a direction away from the hollow axis, and thus the slit 110 has a curved shape if viewed in a cross section.

Here, the cylindrical body has the hollow portion 120 as described above, and air passes through the hollow portion 120. The mandrel member 100 according to the present disclosure may be mounted on the winder, and a separate air supplier (see FIG. 3A) may be installed inside or outside the winder. For example, the air supplier may be installed to assist in separating an electrode assembly without deforming a shape of the electrode assembly if separating the electrode assembly from a mandrel. Air may be sprayed between the mandrel member 100 and the electrode assembly immediately before separating the electrode assembly, thereby suppressing the occurrence of a tail-out phenomenon in which an inner end portion of the wound electrode assembly may be pulled outward when the electrode assembly is separated. Air may be supplied to the hollow portion 120 using the air supplier installed in the winder. For example, an additional flow path may be provided in the air supplier to blow some air into the hollow portion 120 of the mandrel member 100.

Again, as described above, the mandrel member 100 has the plurality of slits 110 passing through a cylindrical wall, and the hollow portion 120 of the cylindrical body is in fluid communication with (e.g., vent to) the outside of the sidewall of the cylindrical body through the slits 110. In such a structure, air discharged from the air supplier enters the hollow portion 120 from a leading end portion of the mandrel member 100 and may be discharged to the outside from a trailing end portion of the mandrel member 100. In such a process, air flowing into the hollow portion 120 branches into a plurality of air portions through the plurality of slits 110 and may be ejected outward in a radial direction of the cylindrical body as indicated by an arrow in FIG. 4A or 4B. Since a pressure of air supplied to the hollow portion 120 may be high pressure and a chink of the slit 110 may be narrow, a pressure of air ejected to the outside of the cylindrical body becomes quite high. As described above, since each slit 110 has a curved shape if viewed in a cross section, directionality may be provided if air is ejected outward.

According to such a configuration, the Coanda effect may occur near an outer peripheral surface of the cylindrical body. The Coanda effect refers to a phenomenon in which, if a fluid flows in contact with a curved surface, the fluid flows along a curvature of the curved surface instead of flowing in a straight line. According to the present disclosure, the mandrel member 100 has the shape of the cylindrical body, the outer peripheral surface thereof may be a curved surface, and each slit is oriented to have an inclination with respect to the radial direction. Thus, if air supplied to the hollow portion 120 of the mandrel member 100 is discharged to a curved outer peripheral surface of the cylindrical body through the curved inclined slit 110, the air has directionality in a direction toward the outer peripheral surface. Therefore, according to the mandrel member 100 of the present invention, air passing through the hollow portion 120 leaks out of the cylindrical body through the slit 110, causing the Coanda effect. Accordingly, air leaks out in a substantially tangential direction with respect to the outer peripheral surface of the cylindrical body, thereby generating a flow of air that attaches the sheet-type stack 20 approaching the outer peripheral surface of the cylindrical body to the outer peripheral surface of the cylindrical body.

The air from the air supplier may be supplied to the hollow portion 120 only while the sheet-type stack 20 is in contact with the outer peripheral surface of the cylindrical body of the mandrel member 100 and the mandrel member 100 rotates once for the first time. While the mandrel member 100 rotates once, the sheet-type stack 20 surrounds the outer peripheral surface of the mandrel member 100 by the Coanda effect, and in this way, if the sheet-type stack 20 is first fixed to the mandrel member 100, the supply of air may be stopped, and then the physical winding of the stack 20 may be performed by the rotation of the mandrel member 100. According to such a configuration, an insertion groove for inserting and fixing the sheet-type stack 20 does not need to be provided in the mandrel member 100.

The mandrel member 100 according to one or more embodiments of the present invention is shown in FIG. 4A. The mandrel member 100 as recited in claim 1 is provided as one member, and the plurality of slits 110 are formed at equal intervals in the circumferential direction, and each slit 110 has a curved shape. For example, as shown, six slits 110 may be formed in the circumferential direction. The air supplied to the hollow portion 120 of the mandrel member 100 is discharged to the outside of the cylindrical body through the curved inclined slit 110, and is discharged in a direction toward the outer peripheral surface, substantially in a direction in contact with the outer peripheral surface. Accordingly, the discharged air has directionality as shown at the central part of FIG. 4A. Therefore, due to the above-described Coanda effect, a flow of air that attaches the stack 20 to the outer peripheral surface of the cylindrical body may be generated in a space between the mandrel member 100 and the sheet-type stack 20, and thus the sheet-type stack 20 may be wound while being attached to the outer peripheral surface of the cylindrical body.

An even number of slits may be formed at equal intervals in the circumferential direction to have a structure in which facing slits may be symmetrical with each other.

Referring to a cross section shown at the right side of FIG. 4A, each slit may be formed in a shape of an arc of a virtual circle of which a diameter may be 2/3 of an outer diameter of the mandrel member, and the centers of the virtual circles forming respective slits may be present on a virtual concentric circle. For example, the mandrel member may be a hollow cylindrical body of which a vertical cross-sectional outer diameter may be 6 Φ, and each slit may be formed in a shape of a virtual arc with a diameter of 4 Φ.

A mandrel member 100 according to another embodiment of the present invention is shown in FIG. 4B. The mandrel member 100 is formed such that a plurality of blade units 101 extending in a longitudinal direction are disposed to achieve the plurality of slits 110 at preset intervals. A plurality of slits 110 are formed at equal intervals in a circumferential direction, and each slit 110 has a curved shape. For example, as shown in Fig. 4B, six blade units 101 may be in the circumferential direction, and a pair of adjacent blade units 101 may form one slit 110, thereby forming six slits 110.

For example, as shown in FIG. 4B, each blade unit 101 has a structure in which an outer peripheral surface and an inner peripheral surface may be curved inward in a width direction, and a curvature of the outer peripheral surface may be less than a curvature of the inner peripheral surface. In the blade unit 101 having such a configuration, a trailing end portion of one blade unit 101 in a width direction and a leading end portion of an adjacent blade unit 101 in a width direction overlap each other in a preset manner to form one mandrel member 100 having a cylindrical shape. In this case, the formed interval constitutes the slit 110. In one or more embodiments, an outer peripheral surface of a trailing end portion of one blade unit 101 in a width direction and an inner peripheral surface of a leading end portion of an adjacent blade unit 101 in a width direction overlap each other to have an interval, thereby forming the entire mandrel member 100 having an approximately cylindrical shape, and a pair of adjacent blade units form one slit 110, thereby forming a total of six curved slits 110.

According to such a configuration of the mandrel member 100, a sheet-type stack 20 may be wound while attached in close contact with the mandrel member 100 having a cylindrical shape from the beginning by the Coanda effect, and thus during an existing process, a taegeuk-patterned separator is not formed at a central portion of a jelly roll-type electrode assembly. Therefore, there is no need to separately perform a reform process after a stack is wound.

According to embodiments of the present invention, a sheet-type stack may be wound while attached in close contact with a mandrel member having a cylindrical shape from the beginning by the Coanda effect, and thus during an existing process, a taegeuk-patterned separator is not formed at a central portion of a jelly roll-type electrode assembly. Therefore, there is no need to separately perform a reform process after a stack is wound.

The present invention provides a mandrel member having a new shape which improves a problem of a separator loosening at a central portion from which a mandrel may be removed after a winding process of an electrode assembly.

The embodiments described above are just some of the embodiments for carrying out a mandrel member of a winder for a secondary battery according to the present invention, and the scope of the invention is defined by the appended claims.

## Claims

1. A mandrel member (100) of a winder for a secondary battery, which is configured to be mounted in a winder to manufacture a jelly roll-type electrode assembly by winding a stack (20) of a first electrode plate (21), a separator (22), and a second electrode plate (23), the mandrel member (100) comprising a cylindrical body having a hollow portion (120), wherein the cylindrical body includes a plurality of slits (110) crossing the cylindrical body in a hollow axis direction so that the hollow portion (120) inside the cylindrical body is in fluid communication with the outside of the cylindrical body,
**characterized in that**
each slit (110) is oriented to have an inclination with respect to a radial direction so that air passing through the hollow portion (120) leaks out through the plurality of slits (110) in a tangential direction with respect to an outer peripheral surface of the cylindrical body, wherein
the mandrel member (100) is one member and includes the plurality of slits (110) formed at equal intervals in a circumferential direction, and wherein each of the plurality of slits (110) has a curved shape.

2. The mandrel member (100) as claimed in claim 1, wherein an even number of slits (110) are formed at equal intervals in a circumferential direction and have an arrangement structure in which facing slits (110) are symmetrical with each other.

3. The mandrel member (100) as claimed in claim 1 or 2, wherein the mandrel member (100) is rotatable in a rotation direction, and wherein each slit (110) has an oblique inclination in a direction opposite to the rotation direction of the mandrel member (100).

4. The mandrel member (100) as claimed in claim 3, wherein:
the mandrel member (100) is a hollow cylindrical body of which a vertical cross-sectional outer diameter is 6 Φ,
each of the slits (110) is formed in an arc shape of a virtual circle with a diameter of 4 Φ, and
centers of each virtual circle forming the plurality of slits (110) are present on a virtual concentric circle.

5. A mandrel member (100) of a winder for a secondary battery, which is configured to be mounted in a winder to manufacture a jelly roll-type electrode assembly by winding a stack (20) of a first electrode plate (21), a separator (22), and a second electrode plate (23), the mandrel member (100) comprising a cylindrical body having a hollow portion (120), wherein the cylindrical body includes a plurality of slits (110) crossing the cylindrical body in a hollow axis direction so that the hollow portion (120) inside the cylindrical body is in fluid communication with the outside of the cylindrical body, wherein
the mandrel member (100) includes a plurality of blade units (101), which extend in a longitudinal direction, to have the plurality of slits (110) at preset intervals,
**characterized in that**
a trailing end portion of one blade unit (101) in a width direction and a leading end portion of an adjacent blade unit (101) in a width direction overlap each other to have one of the preset intervals to form the plurality of slits (110), wherein
each blade unit (101) has a structure in which an outer peripheral surface and an inner peripheral surface are curved inward in the width direction,
a curvature of the outer peripheral surface is less than a curvature of the inner peripheral surface, and an outer peripheral surface of the trailing end portion of one blade unit (101) in the width direction and an inner peripheral surface of the leading end portion of the adjacent blade unit (101) in the width direction overlap each other to form a slit (110) of the plurality of slits (110) having a curved shape.

6. The mandrel member (100) as claimed in claim 5, wherein each slit (110) is oriented to have an inclination with respect to a radial direction so that air passing through the hollow portion (120) leaks out through the plurality of slits (110) in a tangential direction with respect to an outer peripheral surface of the cylindrical body.

7. The mandrel member (100) as claimed in claim 5 or 6, wherein the mandrel member (100) includes six blade units (101).

8. The mandrel member (100) as claimed in one of the preceding claims, wherein:
a leading end portion of the mandrel member (100) is adapted to be mounted on an air supplier provided in the winder,
so that air discharged from the air supplier enters the hollow portion from the leading end portion of the mandrel member (100), the air flowing into the hollow portion branching into a plurality of portions through the plurality of slits (110) and is ejected outward in a radial direction of the cylindrical body, and the remaining air is discharged to the outside from a trailing end portion of the mandrel member (100).

9. A winder for manufacturing a jelly roll-type electrode assembly of a secondary battery, the winding comprising a mandrel member (100) according to one of the preceding claims and being configured to wind a stack (20) of a first electrode plate (21), a separator (22), and a second electrode plate (23) to form a jelly roll-type electrode assembly.

10. The winder according to claim 9, further comprising an air supplier,
wherein a leading end portion of the mandrel member (100) is mounted on the air supplier, so that air discharged from the air supplier enters the hollow portion (120) from the leading end portion of the mandrel member (100), the air flowing into the hollow portion branching into a plurality of portions through the plurality of slits (110) and is ejected outward in a radial direction of the cylindrical body, and the remaining air is discharged to the outside from a trailing end portion of the mandrel member (100).

## Patentansprüche

1. Dornelement (100) einer Wickelvorrichtung für eine Sekundärbatterie, das so konfiguriert ist, dass es in einer Wickelvorrichtung montiert werden kann, um eine Jelly-Roll-artige Elektrodenbaugruppe durch Aufwickeln eines Stapels (20) aus einer ersten Elektrodenplatte (21), einem Separator (22) und einer zweiten Elektrodenplatte (23) herzustellen, wobei das Dornelement (100) einen zylindrischen Körper mit einem hohlen Abschnitt (120) umfasst, wobei der zylindrische Körper mehrere Schlitze (110) umfasst, die den zylindrischen Körper in einer hohlen Achsenrichtung kreuzen, so dass der hohle Abschnitt (120) innerhalb des zylindrischen Körpers in Fluidkommunikation mit der Außenseite des zylindrischen Körpers steht,
**dadurch gekennzeichnet, dass**
jeder Schlitz (110) so ausgerichtet ist, dass er eine Neigung in Bezug auf eine Radialrichtung aufweist, so dass Luft, die durch den hohlen Abschnitt (120) strömt, durch die mehreren Schlitze (110) in einer Tangentialrichtung in Bezug auf eine Außenumfangsfläche des zylindrischen Körpers austritt, wobei
das Dornelement (100) ein Element ist und die mehreren Schlitze (110) umfasst, die in gleichen Abständen in Umfangsrichtung ausgebildet sind, und wobei jeder der mehreren Schlitze (110) eine gekrümmte Form aufweist.

2. Dornelement (100) nach Anspruch 1, wobei eine gerade Anzahl von Schlitzen (110) in gleichen Abständen in Umfangsrichtung ausgebildet sind und eine Anordnungsstruktur aufweisen, bei der einander gegenüberliegende Schlitze (110) symmetrisch zueinander sind.

3. Dornelement (100) nach Anspruch 1 oder 2, wobei das Dornelement (100) in einer Drehrichtung drehbar ist, und wobei jeder Schlitz (110) eine schräge Neigung in einer Richtung entgegengesetzt zur Drehrichtung des Dornelements (100) aufweist.

4. Dornelement (100) nach Anspruch 3, wobei:
das Dornelement (100) ein hohler zylindrischer Körper ist, dessen vertikaler Querschnitt-Außendurchmesser 6 Φ beträgt,
jeder der Schlitze (110) in einer Bogenform eines virtuellen Kreises mit einem Durchmesser von 4 Φ ausgebildet ist, und
die Mittelpunkte jedes virtuellen Kreises, die die mehreren Schlitze (110) bilden, auf einem virtuellen konzentrischen Kreis liegen.

5. Dornelement (100) einer Wickelvorrichtung für eine Sekundärbatterie, das so konfiguriert ist, dass es in einer Wickelvorrichtung montiert werden kann, um eine Jelly-Roll-artige Elektrodenbaugruppe durch Aufwickeln eines Stapels (20) aus einer ersten Elektrodenplatte (21), einem Separator (22) und einer zweiten Elektrodenplatte (23) herzustellen, wobei das Dornelement (100) einen zylindrischen Körper mit einem hohlen Abschnitt (120) umfasst, wobei der zylindrische Körper mehrere Schlitze (110) umfasst, die den zylindrischen Körper in einer hohlen Achsenrichtung kreuzen, so dass der hohle Abschnitt (120) innerhalb des zylindrischen Körpers in Fluidkommunikation mit der Außenseite des zylindrischen Körpers steht, wobei
das Dornelement (100) mehrere Klingeneinheiten (101) umfasst, die sich in Längsrichtung erstrecken, um die mehreren Schlitze (110) in voreingestellten Abständen aufzuweisen,
**dadurch gekennzeichnet, dass**
sich ein hinterer Endabschnitt einer Klingeneinheit (101) in Breitenrichtung und ein vorderer Endabschnitt einer benachbarten Klingeneinheit (101) in Breitenrichtung überlappen, um einen der voreingestellten Abstände zu haben, um die mehreren Schlitze (110) zu bilden, wobei
jede Klingeneinheit (101) eine Struktur aufweist, bei der eine Außenumfangsfläche und eine Innenumfangsfläche in Breitenrichtung nach innen gekrümmt sind,
wobei eine Krümmung der Außenumfangsfläche geringer ist als eine Krümmung der Innenumfangsfläche, und wobei sich eine Außenumfangsfläche des hinteren Endabschnitts einer Klingeneinheit (101) in Breitenrichtung und eine Innenumfangsfläche des vorderen Endabschnitts der benachbarten Klingeneinheit (101) in Breitenrichtung überlappen, um einen Schlitz (110) der mehreren Schlitze (110) mit einer gekrümmten Form zu bilden.

6. Dornelement (100) nach Anspruch 5, wobei jeder Schlitz (110) so ausgerichtet ist, dass er eine Neigung in Bezug auf eine Radialrichtung aufweist, so dass Luft, die durch den hohlen Abschnitt (120) strömt, durch die mehreren Schlitze (110) in einer Tangentialrichtung in Bezug auf eine Außenumfangsfläche des zylindrischen Körpers austritt.

7. Dornelement (100) nach Anspruch 5 oder 6, wobei das Dornelement (100) sechs Klingeneinheiten (101) umfasst.

8. Dornelement (100) nach einem der vorstehenden Ansprüche, wobei:
ein vorderer Endabschnitt des Dornelements (100) so ausgelegt ist, dass er an einer in der Wickelvorrichtung vorgesehenen Luftzufuhr angebracht werden kann,
so dass aus der Luftzufuhr abgegebene Luft aus dem vorderen Endabschnitt des Dornelements (100) in den hohlen Abschnitt eintritt, wobei sich die in den hohlen Abschnitt strömende Luft durch die mehreren Schlitze (110) in mehrere Teile verzweigt und in radialer Richtung des zylindrischen Körpers nach außen ausgestoßen wird, während die verbleibende Luft aus einem hinteren Endabschnitt des Dornelements (100) nach außen abgegeben wird.

9. Wickelvorrichtung zur Herstellung einer Jelly-Roll-artigen Elektrodenbaugruppe einer Sekundärbatterie, wobei die Wickelvorrichtung ein Dornelement (100) nach einem der vorstehenden Ansprüche umfasst und dazu konfiguriert ist, einen Stapel (20) aus einer ersten Elektrodenplatte (21), einem Separator (22) und einer zweiten Elektrodenplatte (23) aufzuwickeln, um eine Jelly-Roll-artige Elektrodenbaugruppe zu bilden.

10. Wickelvorrichtung nach Anspruch 9, umfassend ferner eine Luftzufuhr,
wobei ein vorderer Endabschnitt des Dornelements (100) an der Luftzufuhr angebracht ist, so dass aus der Luftzufuhr abgegebene Luft aus dem vorderen Endabschnitt des Dornelements (100) in den hohlen Abschnitt (120) eintritt, wobei sich die in den hohlen Abschnitt strömende Luft durch die mehreren Schlitze (110) in mehrere Teile verzweigt und in radialer Richtung des zylindrischen Körpers nach außen ausgestoßen wird, während die verbleibende Luft aus einem hinteren Endabschnitt des Dornelements (100) nach außen abgegeben wird.

## Revendications

1. Élément de mandrin (100) d'un enrouleur pour une batterie secondaire, qui est configuré pour être monté dans un enrouleur pour fabriquer un ensemble électrode de type roulé en enroulant un empilement (20) d'une première plaque d'électrode (21), d'un séparateur (22) et d'une deuxième plaque d'électrode (23), l'élément de mandrin (100) comportant un corps cylindrique présentant une partie creuse (120), dans lequel le corps cylindrique inclut une pluralité de fentes (110) traversant le corps cylindrique dans une direction d'axe creux de sorte que la partie creuse (120) à l'intérieur du corps cylindrique soit en communication fluidique avec l'extérieur du corps cylindrique,
**caractérisé en ce que**
chaque fente (110) est orientée pour présenter une inclinaison par rapport à une direction radiale de sorte que l'air passant à travers la partie creuse (120) s'échappe à travers la pluralité de fentes (110) dans une direction tangentielle par rapport à une surface périphérique externe du corps cylindrique, dans lequel
l'élément de mandrin (100) est un élément et inclut la pluralité de fentes (110) formées à intervalles égaux dans une direction circonférentielle, et dans lequel chacune de la pluralité de fentes (110) présente une forme incurvée.

2. Élément de mandrin (100) selon la revendication 1, dans lequel un nombre pair de fentes (110) sont formées à intervalles égaux dans une direction circonférentielle et présentent une structure d'agencement dans laquelle des fentes opposées (110) sont symétriques les unes par rapport aux autres.

3. Élément de mandrin (100) selon la revendication 1 ou 2, dans lequel l'élément de mandrin (100) peut tourner dans une direction de rotation, et dans lequel chaque fente (110) présente une inclinaison oblique dans une direction opposée à la direction de rotation de l'élément de mandrin (100).

4. Élément de mandrin (100) selon la revendication 3, dans lequel :
l'élément de mandrin (100) est un corps cylindrique creux dont un diamètre extérieur de section transversale verticale est de 6 Φ,
chacune des fentes (110) est formée sous la forme d'un arc d'un cercle virtuel d'un diamètre de 4 Φ, et
des centres de chaque cercle virtuel formant la pluralité de fentes (110) sont présents sur un cercle concentrique virtuel.

5. Élément de mandrin (100) d'un enrouleur pour une batterie secondaire, qui est configuré pour être monté dans un enrouleur pour fabriquer un ensemble électrode de type roulé en enroulant un empilement (20) d'une première plaque d'électrode (21), d'un séparateur (22) et d'une deuxième plaque d'électrode (23), l'élément de mandrin (100) comportant un corps cylindrique présentant une partie creuse (120), dans lequel le corps cylindrique inclut une pluralité de fentes (110) traversant le corps cylindrique dans une direction d'axe creux de sorte que la partie creuse (120) à l'intérieur du corps cylindrique soit en communication fluidique avec l'extérieur du corps cylindrique, dans lequel
l'élément de mandrin (100) inclut une pluralité d'unités de lame (101), qui s'étendent dans une direction longitudinale, pour présenter la pluralité de fentes (110) à des intervalles prédéfinis,
**caractérisé en ce que**
une partie d'extrémité arrière d'une unité de lame (101) dans une direction de largeur et une partie d'extrémité avant d'une unité de lame (101) adjacente dans une direction de largeur se chevauchent pour présenter l'un des intervalles prédéfinis pour former la pluralité de fentes (110), dans lequel
chaque unité de lame (101) présente une structure dans laquelle une surface périphérique externe et une surface périphérique interne sont incurvées vers l'intérieur dans la direction de largeur,
une courbure de la surface périphérique externe est inférieure à une courbure de la surface périphérique interne, et
une surface périphérique externe de la partie d'extrémité arrière d'une unité de lame (101) dans la direction de largeur et une surface périphérique interne de la partie d'extrémité avant de l'unité de lame (101) adjacente dans la direction de largeur se chevauchent pour former une fente (110) de la pluralité de fentes (110) présentant une forme incurvée.

6. Élément de mandrin (100) selon la revendication 5, dans lequel chaque fente (110) est orientée pour présenter une inclinaison par rapport à une direction radiale de sorte que l'air passant à travers la partie creuse (120) s'échappe à travers la pluralité de fentes (110) dans une direction tangentielle par rapport à une surface périphérique externe du corps cylindrique.

7. Élément de mandrin (100) selon la revendication 5 ou 6, dans lequel l'élément de mandrin (100) inclut six unités de lame (101).

8. Élément de mandrin (100) selon l'une quelconque des revendications précédentes, dans lequel :
une partie d'extrémité avant de l'élément de mandrin (100) est adaptée pour être montée sur un fournisseur d'air prévu dans l'enrouleur,
de sorte que l'air évacué du fournisseur d'air pénètre dans la partie creuse à partir de la partie d'extrémité avant de l'élément de mandrin (100), l'air s'écoulant dans la partie creuse se ramifiant en une pluralité de parties à travers la pluralité de fentes (110) et est éjecté vers l'extérieur dans une direction radiale du corps cylindrique, et l'air restant est évacué vers l'extérieur à partir d'une partie d'extrémité arrière de l'élément de mandrin (100).

9. Enrouleur pour la fabrication d'un ensemble électrode de type roulé d'une batterie secondaire, l'enroulement comportant un élément de mandrin (100) selon l'une des revendications précédentes et étant configuré pour enrouler un empilement (20) d'une première plaque d'électrode (21), d'un séparateur (22) et d'une deuxième plaque d'électrode (23) pour former un ensemble électrode de type enroulé.

10. Enrouleur selon la revendication 9, comportant en outre un fournisseur d'air,
dans lequel une partie d'extrémité avant de l'élément de mandrin (100) est montée sur le fournisseur d'air, de sorte que l'air évacué du fournisseur d'air pénètre dans la partie creuse (120) à partir de la partie d'extrémité avant de l'élément de mandrin (100), l'air s'écoulant dans la partie creuse se ramifiant en une pluralité de parties à travers la pluralité de fentes (110) et est éjecté vers l'extérieur dans une direction radiale du corps cylindrique, et l'air restant est évacué vers l'extérieur à partir d'une partie d'extrémité arrière de l'élément de mandrin (100).
